(19) Europäisches Patentamt / European Patent Office / Office européen des brevets

(11) **EP 2 479 918 A1**

(12) **EUROPEAN PATENT APPLICATION**

(43) Date of publication:
**25.07.2012 Bulletin 2012/30**

(51) Int Cl.:
***H04L 5/00*** *(2006.01)*

(21) Application number: **12151886.4**

(22) Date of filing: **20.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.01.2011 US 201161434792 P**

(71) Applicant: **ZTE (USA) Inc.**
**Iselin, New Jersey 08830 (US)**

(72) Inventor: **Zhang, Wenfeng**
**Plano, TX Texas 75025 (US)**

(74) Representative: **Witte, Weller & Partner**
**Postfach 10 54 62**
**70047 Stuttgart (DE)**

(54) **Methods and systems for transmitting SFBC signals with CSI-RS transmission and related muting in LTE-advance systems**

(57) Systems and methods for transmitting a physical downlink shared channel (PDSCH) of spatial-frequency block coding (SFBC) format in a subframe that includes at least one of a channel state information reference signal (CSI-RS) and zero-power muting are disclosed. A processor unit is groups one or more resource elements (REs) available for at least one of CSI-RS and zero-power muting, and the subframe including the group of one or more REs is transmitted. All of the one or more REs in a group may be used for PDSCH rate matching together, or none of the one or more REs in the group may be used for PDSCH rate matching. All REs on one OFDM symbol may not be used for PDSCH rate matching if any two REs per SFBC pair on the OFDM symbol, are separated by at least N REs, where N is preferably equal to 1 or 2.

FIG. 1

**Description**

**Cross-Reference to Related Applications**

This application claims priority to U.S. Provisional Patent Application No. 61/434,792, filed on January 20, 2011, entitled "Methods for Transmitting SFBC Signals with CSI-RS Transmission and Related Muting in LTE-Advance Systems," the entirety of which is incorporated by reference herein.

**Field of the Invention**

Embodiments of the present invention relate generally to wireless communication, and more particularly to systems and methods for transmitting a spatial-frequency block coding (SFBC) signal along with the transmission of a channel state information reference signal (CSI-RS) and related muting in a wireless communication system.

**Background**

In wireless communication systems, downlink reference signals are typically created to provide a reference for channel estimation used in coherent demodulation as well as a reference for a channel quality measurement used in multi-user scheduling. In the LTE Rel-8 specification, one single type of downlink reference format called a cell-specific reference signal (CRS) is defined for both channel estimation and channel quality measurement. The characteristics of Rel-8 CRS include that, regardless of the multiple in multiple out (MIMO) channel rank that the user equipment (UE) actually needs, the base station can always broadcast the CRS to all UE based on the largest number of MIMO layers/ ports.

In the 3GPP LTE Rel-8 system, the transmission time is partitioned into units of a frame that is 10ms long and is further equally divided into 10 subframes, which are labeled as subframe #0 to subframe #9. While the LTE frequency division duplexing (FDD) system has 10 contiguous downlink subframes and 10 contiguous uplink subframes in each frame, the LTE time-division duplexing (TDD) system has multiple downlink-uplink allocations, whose downlink and uplink subframe assignments are given in Table I, where the letters D, U and S represent the corresponding subframes and respectively refer to the downlink subframe, uplink subframe and special subframe that contains the downlink transmission in the first part of a subframe and the uplink transmission in the last part of subframe.

Table 1: TDD allocation configurations

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

In one system configuration instance (called normal cyclic prefix, or normal-CP) in LTE, each subframe includes $2N_{symb}^{DL}=14$ equal-duration time symbols with the index from 0 to 13. In another system configuration instance (called extended cyclic prefix, or extended-CP) in LTE, each subframe contains $2N_{symb}^{DL}=12$ equal-duration time symbols with an index from 0 to 11.

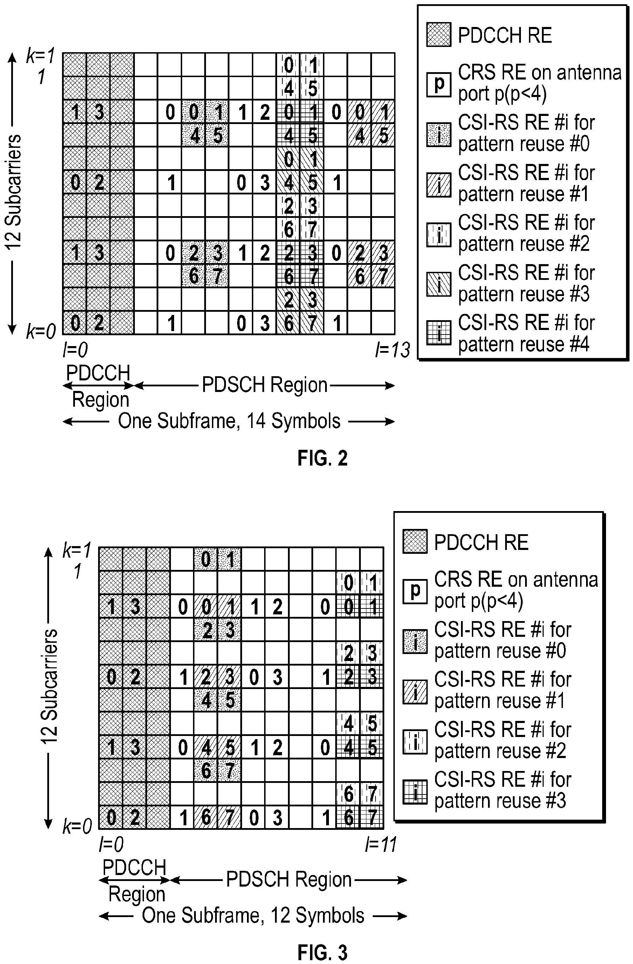

The frequency domain resource up to the full bandwidth within one time symbol is partitioned into subcarriers. One physical resource block (PRB) is specified over a rectangular 2-D frequency-time resource area, covering 12 contiguous subcarriers over the frequency domain and 1 subframe over time domain, and holding 12*14=168 resource elements (RE) for normal-CP subframe as shown in Figure 2, or 12*12=144 RE's for extended-CP subframe as shown in Figure 3. Each regular subframe is partitioned into two parts: the PDCCH (physical downlink control channel) region and PDSCH (physical downlink shared channel) region. The PDCCH region normally occupies the first several symbols per subframe and carries the handset specific control channels, and the PDSCH region occupies the rest of the subframe and carries the general-purpose traffic.

LTE systems require a CRS to be a mandatory downlink signal. The CRS is utilized for downlink signal strength measurement, and for coherent demodulation of the PDSCH in the same resource block. CRS transmission for up to four antenna ports can have the same pattern in each regular subframe, and occurs on symbols {0,1,4,7,8,11} in a normal-CP subframe and symbols {0,1,3,6,7,9} in an extended-CP subframe. Each CRS symbol carries 2 CRS REs per port per resource block in the frequency domain, as shown in both Figures 2 and 3. The actual subcarrier index of the CRS is shifted by $v_{\text{shift}} = N_{\text{ID}}^{\text{cell}} \mod 6$, where $N_{ID}^{cell}$ is the cell identification. Fig. 2 and Fig. 3 show an example of CRS with $v_{\text{shift}} = 0$.

In LTE systems, the PDSCH can be transmitted in the format of spatial frequency block coding (SFBC), which requires the sequential allocation of two REs in the frequency domain.

As 3GPP LTE evolves from Rel-8 to Rel-10 (also called LTE-advance or LTE-A), due to the large number of supported antenna ports (e.g., up to 8), it may require a large amount of overhead to maintain the CRS-like reference signal on all ports. Accordingly, the downlink reference signal functions can be split into two reference signal formats:

- Demodulation reference signal (DMRS): this type of reference signal is used for coherent channel estimation and should have sufficient density and should be sent on a per-UE basis; and
- Channel state information reference signal (CSI-RS): this type of reference signal is used for channel quality measurement by all UE and could be implemented over the frequency-time domain.

It is agreed in 3GPP standard body that the allowed 8-port CSI-RS patterns for both FDD and TDD are specified as in Figure 2 for a normal-CP subframe and in Figure 3 for an extended-CP subframe. The 4-port CSI-RS pattern is nested inside an 8-port CSI-RS pattern by using the REs labeled with either {0,1,2,3} or {4,5,6,7}. The 2-port CSI-RS pattern is nested inside an 8-port CSI-RS pattern by using the REs labeled with {2i, 2i+1}.

Muting can be performed by sending zero power on the RE locations that are labeled with either {0,1,2,3} or {4,5,6,7} or both, depending on the utilized REs.

Both CSI-RS and zero-power muting can be configured in PRB along with PDSCH, in which case the allocation of unicast PDSCH for an LTE release-10 handset is mapped around CSI-RS REs and muting REs by rate matching, i.e., the CSI-RS REs and muting REs are not used in the calculation of the channel coding and are therefore avoided in resource mapping of PDSCH.

The transmission of CSI-RS and zero-power muting could be turned off under certain condition, such as if they fall into the same subframe carrying the system information broadcast or paging channel.

When the PDSCH in the format of SFBC is scheduled by a base station to transmit in the PRB where the CSI-RS or muting occurs, for example, the number of REs per symbol that is available for SFBC rate matching could be odd, which means one RE is left as an orphan that can not be paired for an SFBC transmission. Some solutions to handle such orphan REs were proposed in which one more RE in the rate matching operation was removed, or one more PDSCH RE was punctured. However, there is a concern regarding the resulting large number of combinations in the implementation and testing. Alternatively, any OFDM symbols containing the CSI-RS RE or muting RE can be skipped; however, this would come at the cost of more unnecessary resource loss.

Embodiments disclosed herein provide methods to avoid orphan REs in SFBC transmissions and to compromise both implementation complexity and resource loss. These and other implementations and examples of the cell identification methods in software and hardware are described in greater details in the attached drawings and the detailed description.

**Summary of the Invention**

The presently disclosed embodiments are directed to solving issues relating to one or more of the problems presented in the prior art, as well as providing additional features that will become readily apparent by reference to exemplary embodiments in the following detailed description when taken in conjunction with the accompanying drawings.

One embodiment is directed to a method of transmitting a PDSCH of spatial-frequency block coding (SFBC) format in a subframe that includes at least one of a CSI-RS and zero-power muting. The method includes grouping one or more REs available for at least one of CSI-RS and zero-power muting; and transmitting the subframe including the group of one or more REs. According to various embodiments, all of the one or more REs in a group are used for PDSCH rate matching together, or none of the one or more REs in the group is used for PDSCH rate matching. According to an embodiment, all REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs, where N can be equal to 1 or 2.

Another embodiment is directed to an apparatus configured to transmit and receive a PDSCH of SFBC format in a subframe that includes at least one of a CSI-RS and zero-power muting. The apparatus includes a processor unit configured to group one or more REs available for at least one of CSI-RS and zero-power muting, wherein all of the one or more REs in a group are used for PDSCH rate matching together, or none of the one or more REs in the group is used for PDSCH rate matching. According to an embodiment, all REs on one OFDM symbol in PDSCH allocation are not used for PDSCH rate matching if any two REs per SFBC pair on the OFDM symbol, after avoiding any valid RE group, are separated by at least N REs, where N can be equal to 1 or 2.

Yet another embodiment is directed to a non-transitory computer-readable medium storing thereon instructions for, when executed by a processor, performing a method of transmitting a PDSCH of SFBC format in a subframe that includes at least one of a CSI-RS and zero-power muting. The method includes grouping one or more REs available for at least one of CSI-RS and zero-power muting; and transmitting the subframe including the group of one or more REs. According to various embodiments, all of the one or more REs in a group are used for PDSCH rate matching together, or none of the one or more REs in the group is used for PDSCH rate matching. According to an embodiment, all REs on one OFDM symbol in PDSCH allocation are not used for PDSCH rate matching if any two REs per SFBC pair on the OFDM symbol, after avoiding any valid RE group, are separated by at least N REs, where N can be equal to 1 or 2.

## Brief Description of the Drawings

Various exemplary embodiments of the invention are described in detail below with reference to the following Figures. The drawings are provided for purposes of illustration only and merely depict exemplary embodiments of the invention. These drawings are provided to facilitate the reader's understanding of the invention and should not be considered limiting of the breadth, scope, or applicability of the invention. It should be noted that for clarity and ease of illustration these drawings are not necessarily drawn to scale.

FIG. 1 illustrates an exemplary wireless communication system for transmitting and receiving transmissions, according to an exemplary embodiment of the invention.

FIG. 2 illustrates exemplary CSI-RS patterns in an LTE normal-CP subframe that comprises PDCCH, CRS, and CSR-RS REs according to an embodiment of the present invention.

FIG. 3 illustrates exemplary CSI-RS patterns in an LTE extended-CP subframe that comprises PDCCH, CRS, and CSR-RS REs according to an embodiment of the present invention.

FIG. 4(a) illustrates an exemplary RE group in a normal-CP subframe, where each RE group contains 4 REs from each 8-port CSI-RS pattern, according to an embodiment of the present invention.

FIG. 4(b) illustrates an exemplary RE group in an extended-CP subframe, where each RE group contains 4 REs from each 8-port CSI-RS pattern, according to an embodiment of the present invention.

FIG. 5(a) illustrates an exemplary RE group in a normal-CP subframe, where each RE group contains 4 REs from each 8-port CSI-RS pattern, according to an embodiment of the present invention.

FIG. 5(b) illustrates an exemplary RE group in an extended-CP subframe, where each RE group contains 4 REs from each 8-port CSI-RS pattern, according to an embodiment of the present invention.

FIG. 6(a) illustrates an exemplary RE group in a normal-CP subframe, where each RE group contains 8 REs from each 8-port CSI-RS pattern, according to an embodiment of the present invention.

FIG. 6(b) illustrates an exemplary RE group in an extended-CP subframe, where each RE group contains 8 REs from each 8-port CSI-RS pattern, according to an embodiment of the present invention.

## Detailed Description of Exemplary Embodiments

The following description is presented to enable a person of ordinary skill in the art to make and use the invention. Descriptions of specific devices, techniques, and applications are provided only as examples. Various modifications to the examples described herein will be readily apparent to those of ordinary skill in the art, and the general principles defined herein may be applied to other examples and applications without departing from the spirit and scope of the invention. Thus, the present invention is not intended to be limited to the examples described herein and shown, but is to be accorded the scope consistent with the claims.

The word "exemplary" is used herein to mean "serving as an example or illustration." Any aspect or design described herein as "exemplary" is not necessarily to be construed as preferred or advantageous over other aspects or designs.

Reference will now be made in detail to aspects of the subject technology, examples of which are illustrated in the accompanying drawings and tables, wherein like reference numerals refer to like elements throughout.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present invention. The accompanying method claims present elements of the various steps in a sample order, and are not meant to be limited to the specific order or hierarchy presented.

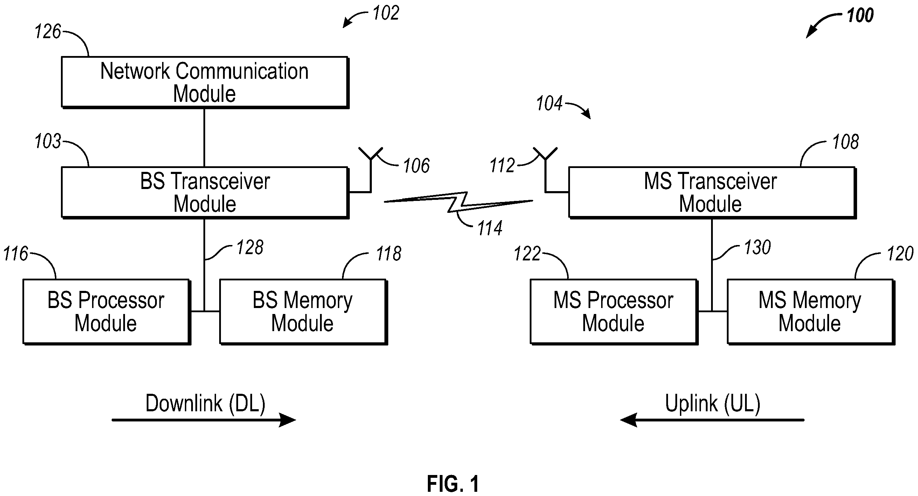

FIG. 1 illustrates an exemplary wireless communication system 100 for transmitting and receiving signals, in accordance with an embodiment of the present invention. The system 100 may include components and elements configured to support known or conventional operating features that need not be described in detail herein. System 100 generally comprises a base station 102 with a base station transceiver module 103, a base station antenna 106, a base station processor module 116, a base station memory module 118 and a network communication module 126. System 100 generally comprises a mobile station 104 with a mobile station transceiver module 108, a mobile station antenna 112, a mobile station memory module 120 and a mobile station processor module 122. Both base station 102 and mobile station 104 may include additional or alternative modules without departing from the scope of the present invention. Further, only one base station 102 and one mobile station 104 is shown in the exemplary system 100; however, any number of base stations 102 and mobile stations 104 could be included and be within the scope of the invention.

These and other elements of system 100 may be interconnected together using a data communication bus (e.g., 128, 130), or any suitable interconnection arrangement. Such interconnection facilitates communication between the various elements of the wireless system 100. Those skilled in the art understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software depends upon the particular application and design constraints imposed on the overall system. Those familiar with the concepts described herein may implement such functionality in a suitable manner for each particular application, but such implementation decisions should not be interpreted as causing a departure from the scope of the present invention.

In the exemplary system 100, the base station transceiver 103 and the mobile station transceiver 108 each comprise a transmitter module and a receiver module (not shown). Additionally, although not shown in this figure, those skilled in the art will recognize that a transmitter may transmit to more than one receiver, and that multiple transmitters may transmit to the same receiver. In a TDD system, transmit and receive timing gaps exist as guard bands to protect against transitions from transmit to receive and vice versa.

In the particular exemplary system depicted in FIG. 1, an "uplink" transceiver 108 includes a transmitter that shares an antenna with an uplink receiver. A duplex switch may alternatively couple the uplink transmitter or receiver to the uplink antenna in time duplex fashion. Similarly, a "downlink" transceiver 103 includes a receiver which shares a downlink antenna with a downlink transmitter. A downlink duplex switch may alternatively couple the downlink transmitter or receiver to the downlink antenna in time duplex fashion.

The mobile station transceiver 108 and the base station transceiver 103 are configured to communicate via a wireless data communication link 114. The mobile station transceiver 108 and the base station transceiver 102 cooperate with a suitably configured RF antenna arrangement 106/112 that can support a particular wireless communication protocol and modulation scheme. In the exemplary embodiment, the mobile station transceiver 108 and the base station transceiver 102 are configured to support industry standards such as the Third Generation Partnership Project Long Term Evolution (3GPP LTE), Third Generation Partnership Project 2 Ultra Mobile Broadband (3GPP2 UMB), Time Division-Synchronous Code Division Multiple Access (TD-SCDMA), Wireless Interoperability for Microwave Access (WiMAX), and other communication standards known in the art. The mobile station transceiver 108 and the base station transceiver 102 may be configured to support alternate, or additional, wireless data communication protocols, including future variations of IEEE 802.16, such as 802.16e, 802.16m, and so on.

According to certain embodiments, the base station 102 controls the radio resource allocations and assignments, and the mobile station 104 is configured to decode and interpret the allocation protocol. For example, such embodiments may be employed in systems where multiple mobile stations 104 share the same radio channel which is controlled by one base station 102. However, in alternative embodiments, the mobile station 104 controls allocation of radio resources for a particular link and is configured to implement the role of radio resource controller or allocator, as described herein.

Processor modules 116/122 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration. Processor modules 116/122 comprise processing logic that is configured to carry out the functions, techniques, and processing tasks associated with the operation of system 100. In particular, the processing logic is configured to support the frame structure parameters described herein. In practical embodiments the processing logic may be resident in the base station and/or may be part of a network architecture that communicates with the base station transceiver 103.

The steps of a method or algorithm described in connection with the embodiments disclosed herein may be embodied directly in hardware, in firmware, in a software module executed by processor modules 116/122, or in any practical combination thereof. A software module may reside in memory modules 118/120, which may be realized as RAM memory, flash memory, ROM memory, EPROM memory, EEPROM memory, registers, a hard disk, a removable disk, a CD-ROM, or any other form of storage medium known in the art. In this regard, memory modules 118/120 may be coupled to the processor modules 118/122 respectively such that the processors modules 116/120 can read information from, and write information to, memory modules 118/120. As an example, processor module 116, and memory modules 118, processor module 122, and memory module 120 may reside in their respective ASICs. The memory modules 118/120 may also be integrated into the processor modules 116/120. In an embodiment, the memory module 118/220 may include a cache memory for storing temporary variables or other intermediate information during execution of instructions to be executed by processor modules 116/222. Memory modules 118/120 may also include non-volatile memory for storing instructions to be executed by the processor modules 116/120.

Memory modules 118/120 may include a frame structure database (not shown) in accordance with an exemplary embodiment of the invention. Frame structure parameter databases may be configured to store, maintain, and provide data as needed to support the functionality of system 100 in the manner described below. Moreover, a frame structure database may be a local database coupled to the processors 116/122, or may be a remote database, for example, a central network database, and the like. A frame structure database may be configured to maintain, without limitation, frame structure parameters as explained below. In this manner, a frame structure database may include a table for purposes of storing frame structure parameters.

The network communication module 126 generally represents the hardware, software, firmware, processing logic, and/or other components of system 100 that enable bidirectional communication between base station transceiver 103, and network components to which the base station transceiver 103 is connected. For example, network communication module 126 may be configured to support Internet or WiMAX traffic. In a typical deployment, without limitation, network communication module 126 provides an 802.3 Ethernet interface such that base station transceiver 103 can communicate with a conventional Ethernet based computer network. In this manner, the network communication module 126 may include a physical interface for connection to the computer network (e.g., Mobile Switching Center (MSC)).

Note that the functions described in the present disclosure may be performed by either a base station 102 or a mobile station 104. A mobile station 104 may be any user device such as a mobile phone, and any mobile station may also be referred to as UE.

Embodiments disclosed herein have specific application but not limited to the Long Term Evolution (LTE) system that is one of the candidates for the 4-th generation wireless system. Embodiments described herein provide various exemplary CSI-RS per-cell patterns. Each of these CSI-RS per-cell patterns illustrates a layout of CSI-RS REs that can belong to a single cell, according to various exemplary embodiments of the invention.

Exemplary embodiments disclosed herein describe a RE group that can be either used by SFBC rate matching if including no CSI-RS or muting RE, or not used at all for SFBC rate matching if including at least one CSI-RS RE or muting RE. This RE group can be specified within the CSI-RS and muting pattern as shown in FIG. 2 for a normal-CP subframe and in FIG. 3 for an extended-CP subframe. For exemplary purposes, one RE group can contain either 4 REs or 8 REs. One of ordinary skill in the art would understand that various other combinations of REs can be implemented without departing from the scope of the present disclosure.

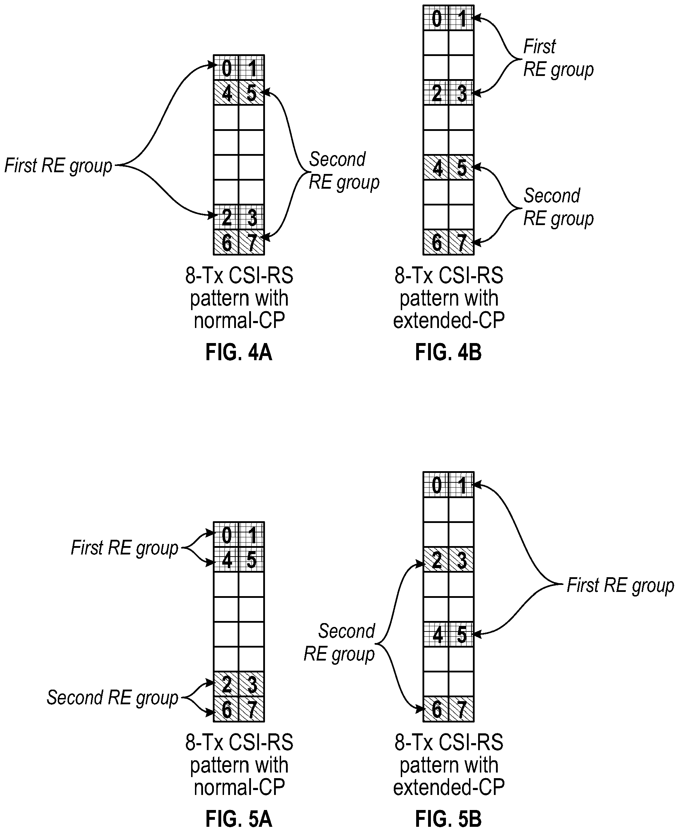

In the case that one RE group includes 4 REs, for example, those 4 REs per group can be the REs labeled with {0,1,2,3} or {4,5,6,7} as shown in FIGs. 4(a) and 4(b). As shown in FIG. 4(a), an 8-port CSI-RS pattern with a normal-CP is depicted, such that each group of 4 REs includes two pairs of time-domain adjacent REs that have the same subcarrier index, with the frequency domain spacing between the two pairs equal to 6. In FIG. 4(b), an 8-port CSI-RS pattern with an extended-CP is depicted, such that each group of 4 REs includes two pairs of time-domain adjacent REs that have the same subcarrier index, with the frequency domain spacing between the two pairs equal to 3.

An alternative choice for those 4 REs per group is to choose the REs labeled with {0,1,4,5} or {2,3,6,7}, as shown in FIGs. 5(a) and 5(b). As shown in FIG. 5(a), an 8-port CSI-RS pattern with a normal-CP is depicted, such that each group of 4 REs includes two pairs of time-domain adjacent REs that have the same subcarrier index, with the frequency domain spacing between the two pairs equal to 1. In FIG. 5(b), an 8-port CSI-RS pattern with an extended-CP is depicted, such that each group of 4 REs includes two pairs of time-domain adjacent REs that have the same subcarrier index, with the frequency domain spacing between the two pairs equal to 6.

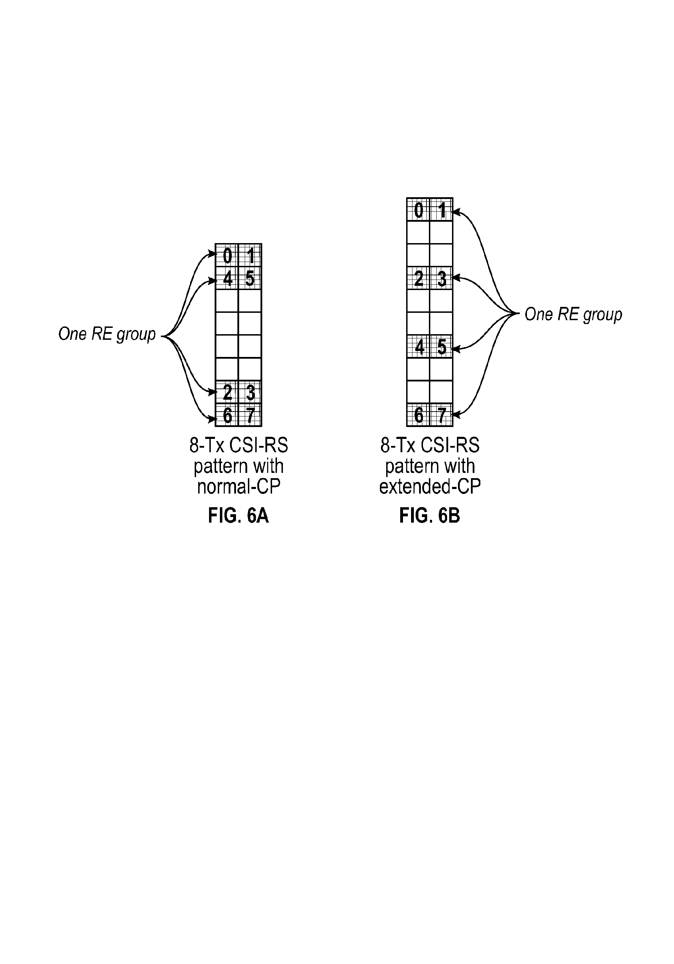

In the case that one RE group includes 8 REs, for example, those 8 REs per group have to be all the REs in one 8-port CSI-RS pattern (according to this example), i.e., the REs labeled through 0 to 7, as shown in FIGs. 6(a) and 6(b).

In some instances the configured CSI-RS transmission and zero power muting does not actually occur in a certain instantaneous subframe due to the existence of a system information broadcast or a paging transmission in that subframe. In this case, an orphan RE does not actually exist, and therefore the rate matching avoidance on the above-specified RE groupings can be omitted. In other words, the RE-group skipping as well as the OFDM-symbol skipping can be conditional based on the actual situation of the CSI-RS and muting transmission, rather than a static configuration for CSI-RS and muting.

By specifying the RE group in, for example, sizes of 4 or 8, the number of REs per symbol available to SFBC rate matching is even so that no orphan RE remains. However, the two REs in each SFBC pair in the frequency domain can be separated by a number of REs that carry CSI-RS REs or muting REs, which is possible in an extended-CP case, for example. If the two REs in each SFBC pair in the frequency domain are too far away (e.g., separated by 1 or more REs), the orthogonality property required for SFBC reception may be not fully maintained, and PDSCH performance can be degraded. Accordingly, it is also possible to skip all REs on one symbol in PDSCH allocation if any two REs per SFBC pair on that symbol are separated by at least N REs, where N can be a predetermined such as 1 or 2, for example. Of course, other values of N could be implemented within the scope of the present disclosure.

It is noted that embodiments are described, for exemplary purposes, with CSI-RS and muting patterns specified for both FDD and TDD. In LTE release-10, for example, there are different sets of CSI-RS and muting patterns specifically used for TDD. One of ordinary skill in the art would realize that the scope of embodiments of the present disclosure, as depicted in FIGs. 4(a), 4(b), 5(a), 5(b), 6(a) and 6(b), is also applicable to TDD-only patterns, as utilized in LTE release-10, for example.

The subframe configurations described in FIGs. 4(a), 5(a) and 6(a) are exemplary. One of ordinary skill in the art would realize that any number of subframes may be occupied and any number of subframes may be transmitted as substantially blank in any order. Likewise, the configurations disclosed herein in FIGs. 4(b), 5(b) and 6(b) to designate blank and transmitted subframes are exemplary. Various methods of designating blank and occupied subframes can be used.

When the PDSCH in the format of SFBC is scheduled by a base station (e.g., BS 102) to transmit in the PRB where the CSI-RS or muting occurs, for example, the number of REs per symbol that is available for SFBC rate matching could be odd, which means one RE is left as an orphan that can not be paired for an SFBC transmission. Thus, embodiments disclosed herein provide methods to avoid orphan REs in SFBC transmissions and to compromise both implementation complexity and resource loss.

In implementation, the above described architecture, methods and their variations may be implemented as computer software instructions or firmware instructions. Such instructions may be stored in an article with one or more non-transitory machine-readable storage devices connected to one or more computers or integrated circuits or digital processors such as digital signal processors and microprocessors. In a communication system of 3GPP LTE and/or LTE-A, the CSI-RS transmission method and related signaling flow and process may be implemented in form of software instructions or firmware instructions for execution by a processor in the transmitter and receiver or the transmission and reception controller. In operation, the instructions are executed by one or more processors to cause the transmitter and receiver or the transmission and reception controller to perform the described functions and operations.

Overall, in particular, the aspects defined in the following clauses are disclosed which form part of the present description, but are not claims, in accordance with decision J 15/88 of the Legal Board of Appeal of the European Patent Office.

(1) A method of transmitting a physical downlink shared channel (PDSCH) of spatial-frequency block coding (SFBC) format in a subframe that includes at least one of a channel state information reference signal (CSI-RS) and zero-power muting, comprising: grouping one or more resource elements (REs) available for at least one of CSI-RS and zero-power muting; and transmitting the subframe including the group of one or more REs, wherein all of the one or more REs in a group are used for PDSCH rate matching together, or none of the one or more REs in the group is used for PDSCH rate matching.

(2) The method of clause 1, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 6.

(3) The method of clause 1, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 3.

(4) The method of clause 1, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 1.

(5) The method of clause 1, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 6.

(6) The method of clause 1, wherein the RE group includes eight REs, such that the eight REs are patterned to include all eight REs in an 8-port CSI-RS pattern with a normal cyclic prefix.

(7) The method of clause 1, wherein the RE group includes eight REs, such that the eight REs are patterned to include all eight REs in an 8-port CSI-RS pattern with an extended cyclic prefix.

(8) The method of clause 1, wherein all REs in one group are used for PDSCH rate matching if none of the REs in the group is either a CSI-RS RE or a zero-power muting RE.

(9) The method of clause 1, wherein none of the REs in one group is used for PDSCH rate matching if at least one RE in the group is either a CSI-RS RE or a zero-power muting RE.

(10) The method of clause 1, wherein the CSI-RS or zero-power muting to trigger the avoidance of an RE group in PDSCH rate matching includes at least one of: the occurrence of at least one of the CSI-RS and the muting is configured by high-layer signaling; and at least one of the CSI-RS and the muting is actually performed.

(11) The method of clause 1, wherein all REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs.

(12) The method of clause 11, where N equals 1 or 2.

(13) The method of clause 1, where an RE that is used for PDSCH rate matching is allocated for PDSCH transmission, while an RE that is not used for PDSCH rate matching is not used for PDSCH transmission.

(14) An apparatus configured to transmit and receive a physical downlink shared channel (PDSCH) of spatial-frequency block coding (SFBC) format in a subframe that includes at least one of a channel state information reference signal (CSI-RS) and zero-power muting, comprising: a processor unit configured to group one or more resource elements (REs) available for at least one of CSI-RS and zero-power muting, wherein all of the one or more REs in a group are used for PDSCH rate matching together, or none of the one or more REs in the group is used for PDSCH rate matching, and all REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs.

(15) The apparatus of clause 14, where N equals to 1 or 2.

(16) The apparatus of clause 14, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 6.

(17) The apparatus of clause 14, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 3.

(18) The apparatus of clause 14, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 1.

(19) The apparatus of clause 14, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 6.

(20) The apparatus of clause 14, wherein the RE group includes eight REs, such that the eight REs are patterned to include all eight REs in an 8-port CSI-RS pattern with a normal cyclic prefix.

(21) The apparatus of clause 14, wherein the RE group includes eight REs, such that the eight REs are patterned to include all eight REs in an 8-port CSI-RS pattern with an extended cyclic prefix.

(22) The apparatus of clause 14, wherein the apparatus is a base station.

(23) The apparatus of clause 14, wherein the apparatus is a mobile device.

(24) A non-transitory computer-readable medium storing thereon instructions for, when executed by a processor, performing a method of transmitting a physical downlink shared channel (PDSCH) of spatial-frequency block coding (SFBC) format in a subframe that includes at least one of a channel state information reference signal (CSI-RS) and zero-power muting, the method comprising: grouping one or more resource elements (REs) available for at least one of CSI-RS and zero-power muting; and transmitting the subframe including the group of one or more REs, wherein all of the one or more REs in a group are used for PDSCH rate matching together, or none of the one or more REs in the group is used for PDSCH rate matching, and all of the one or more REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs.

(25) The non-transitory computer-readable medium of clause 24, wherein N equals 1 or 2.

While various embodiments of the present invention have been described above, it should be understood that they have been presented by way of example only, and not of limitation. Likewise, the various diagrams may depict an example architectural or other configuration for the invention, which is done to aid in understanding the features and functionality that can be included in the invention. The invention is not restricted to the illustrated example architectures or configurations, but can be implemented using a variety of alternative architectures and configurations. Additionally, although the invention is described above in terms of various exemplary embodiments and implementations, it should be understood that the various features and functionality described in one or more of the individual embodiments are not limited in their applicability to the particular embodiment with which they are described, but instead can be applied, alone or in some combination, to one or more of the other embodiments of the invention, whether or not such embodiments are described and whether or not such features are presented as being a part of a described embodiment. Thus the breadth and scope of the present invention should not be limited by any of the above-described exemplary embodiments.

**Claims**

1. Method of transmitting a physical downlink shared channel (PDSCH) of spatial-frequency block coding (SFBC) format in a subframe that includes at least one of a channel state information reference signal (CSI-RS) and zero-power muting, comprising:

   grouping one or more resource elements (REs) available for at least one of CSI-RS and zero-power muting; and
   transmitting the subframe including the group of one or more REs, wherein
   all of the one or more REs in a group are used for PDSCH rate matching together, or none of the one or more REs in the group is used for PDSCH rate matching.

2. Method according to claim 1, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 1 or 6.

3. Method according to claim 1 or 2, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 3 or 6.

4. Method according to any preceding claim, wherein the RE group includes eight REs, such that the eight REs are patterned to include all eight REs in an 8-port CSI-RS pattern with a normal cyclic prefix or an extended cyclic prefix.

5. Method according to any preceding claim, wherein all REs in one group are used for PDSCH rate matching if none of the REs in the group is either a CSI-RS RE or a zero-power muting RE.

6. Method according to any of claims 1 to 4, wherein none of the REs in one group is used for PDSCH rate matching if at least one RE in the group is either a CSI-RS RE or a zero-power muting RE.

7. Method according to any preceding claim, wherein the CSI-RS or zero-power muting to trigger the avoidance of an RE group in PDSCH rate matching includes at least one of:

   the occurrence of at least one of the CSI-RS and the muting is configured by high-layer signaling; and
   at least one of the CSI-RS and the muting is actually performed.

8. Method according to any preceding claim, wherein all REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs, where, preferably, N equals 1 or 2.

9. Method according to any preceding claim, where an RE that is used for PDSCH rate matching is allocated for PDSCH transmission, while an RE that is not used for PDSCH rate matching is not used for PDSCH transmission.

10. Apparatus configured to transmit and receive a physical downlink shared channel (PDSCH) of spatial-frequency block coding (SFBC) format in a subframe that includes at least one of a channel state information reference signal (CSI-RS) and zero-power muting, comprising:

   a processor unit configured to group one or more resource elements (REs) available for at least one of CSI-RS and zero-power muting, wherein
   all of the one or more REs in a group are used for PDSCH rate matching together, or none of the one or more REs in the group is used for PDSCH rate matching, and
   all REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs, where, preferably, N equals to 1 or 2.

11. Apparatus according to claim 10, wherein the RE group includes four REs, such that the four REs are patterned to include two pairs of REs in an 8-port CSI-RS pattern with a normal cyclic prefix, where each pair of REs has a same subcarrier index, and a frequency domain spacing between the two pairs is equal to 1 or 6.

12. Apparatus according to claim 10 or 11, wherein the RE group includes four REs, such that the four REs are patterned to include two pairs of REs in an 8-port CSI-RS pattern with an extended cyclic prefix, where each pair of REs has a same subcarrier index, and a frequency domain spacing between the two pairs is equal to 3 or 6.

13. Apparatus according to any of claims 10 to 12, wherein the RE group includes eight REs, such that the eight REs are patterned to include all eight REs in an 8-port CSI-RS pattern with a normal cyclic prefix or an extended cyclic prefix.

14. Apparatus according to any of claims 10 to 13, wherein the apparatus is a base station or a mobile device.

15. Non-transitory computer-readable medium storing thereon instructions for, when executed by a processor, performing a method of transmitting a physical downlink shared channel (PDSCH) of spatial-frequency block coding (SFBC) format in a subframe that includes at least one of a channel state information reference signal (CSI-RS) and zero-power muting, the method comprising:

grouping one or more resource elements (REs) available for at least one of CSI-RS and zero-power muting; and transmitting the subframe including the group of one or more REs, wherein all of the one or more REs in a group are used for PDSCH rate matching together, or none of the one or more REs in the group is used for PDSCH rate matching, and all of the one or more REs on one orthogonal frequency division multiplexed (OFDM) symbol in PDSCH allocation are not used for PDSCH rate matching if any two REs per SFBC pair on the OFDM symbol, after avoiding any valid RE group, are separated by at least N REs, where, preferably, N equals 1 or 2.

FIG. 1

**FIG. 2**

**FIG. 3**

First RE group

Second
RE group

8-Tx CSI-RS
pattern with
normal-CP

**FIG. 4A**

First
RE group

Second
RE group

8-Tx CSI-RS
pattern with
extended-CP

**FIG. 4B**

First RE group

Second RE group

8-Tx CSI-RS
pattern with
normal-CP

**FIG. 5A**

Second
RE group

First RE group

8-Tx CSI-RS
pattern with
extended-CP

**FIG. 5B**

One RE group

8-Tx CSI-RS
pattern with
normal-CP

**FIG. 6A**

One RE group

8-Tx CSI-RS
pattern with
extended-CP

**FIG. 6B**

Europäisches
Patentamt

European
Patent Office

Office européen
des brevets

**EUROPEAN SEARCH REPORT**

Application Number

EP 12 15 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RENESAS ELECTRONICS EUROPE: "On the orphan RE issue in CSI-RS subframes", 3GPP DRAFT; R1-110186, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050474402, [retrieved on 2011-01-11] * the whole document * | 1-15 | INV. H04L5/00 |
| X | INTEL CORPORATION (UK): "Remaining details of CSI-RS structure", 3GPP DRAFT; R1-110249, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050490153, [retrieved on 2011-01-11] * the whole document * | 1-15 | |
| X | QUALCOMM INC: "SFBC PDSCH transmission in CSI-RS subframes", 3GPP DRAFT; R1-110333 SFBC PDSCH TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050490190, [retrieved on 2011-01-11] * the whole document * | 1-15 | TECHNICAL FIELDS SEARCHED (IPC)<br><br>H04L |

-/--

The present search report has been drawn up for all claims

| Place of search | Date of completion of the search | Examiner |
|---|---|---|
| Munich | 22 May 2012 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 12 15 1886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NOKIA ET AL: "Transmit Diversity in CSI-RS Subframes", 3GPP DRAFT; R1-106202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489648, [retrieved on 2010-11-09] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| Munich | 22 May 2012 | Murcia Martinez, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61434792 A